# EUROPEAN PATENT APPLICATION

(11) **EP 2 883 720 A1**
(43) Date of publication of application: **17.06.2015**
(21) Application number: 14197090.5
(22) Date of filing: 10.12.2014
(51) Int. Cl.: B60C 23/12

(54) **Filter assembly for air maintenance tire**

(30) Priority: 16.12.2013 US 201314107252
(71) Applicant: The Goodyear Tire & Rubber Company, Akron, Ohio 44316 (US)
(72) Inventor: Benedict, Robert Leon, Tallmadge, OH Ohio 44278 (US); Gobinath, Thulasiram, Hudson, OH Ohio 44236 (US); Lin, Cheng-Hsiung, Hudson, OH Ohio 44236 (US); Lamgaday, Robin, Norton, OH Ohio 44230 (US); Losey, Robert Allen, Kent, OH Ohio 44240 (US)
(74) Representative: Kutsch, Bernd

(57) **Abstract**

A tire (12) having a tread portion (38), a pair of sidewalls (32) extending radially inward from the tread portion to join with a respective bead (34), a tire cavity (40), a supporting carcass for the tread portion and sidewalls and a pump passageway (42) positioned within a bending region of the tire (12) is disclosed. The pump passageway is operative to open and close as the tire rotates and has an inlet end (42a, 42b) and an outlet end (44a, 44b). The outlet end is in fluid communication with the tire cavity (40). A valve assembly (200) is in fluid communication with the inlet end of the pump passageway. The tire (12) further comprises: (i) a filter assembly (500) formed of a housing (502) having an interior or first cavity (506) for receiving a filter media (503), the interior or first cavity (506) having an inlet in fluid communication with the outside air and an outlet in fluid communication with a valve assembly port (202), the housing (502) further comprising a second cavity (504), wherein the second cavity (504) is in fluid communication with the pump inlet and a valve assembly outlet (206); or (ii) a filter assembly (600) formed of a housing (602) having a single interior cavity (604) for receiving a filter media (605), the interior cavity having an outlet (608) in fluid communication with a valve assembly port (202), and an inlet in fluid communication with the outside air, wherein the outlet end of the pump passageway (42) is in fluid communication with the tire cavity (40); or (iii) a filter conduit (204) mounted in the tire (12), the filter conduit having a first end in air flow communication with the outside air and a second end connected to a valve assembly port (202), wherein the filter conduit (204) further includes filter media (230).

## Description

### Field of the invention

The invention relates generally to tires and more specifically, to an air maintenance tire or an air maintenance assembly for a tire. This invention was made with Government support under contract number DEEE0005447 awarded by DOE. The US-Government has certain rights in the invention.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will maintain correct air pressure within the tire without a need for driver intervention to compensate for any reduction in tire pressure over time. It is useful to incorporate a filter in the design of an air maintenance tire system, so that the outside air is filtered before entering the system. The filter must be secured to the tire, and be able to sustain rotational forces. The filter must also be designed in such a way to minimize the stresses in the tire and allow for ease of assembly.

### Summary of the Invention

The invention relates to a tire in accordance with claim 1.

Dependent claims refer to preferred embodiments of the invention.

In a first preferred aspect, the invention provides a tire assembly including a tire having a tread portion and a pair of sidewalls extending radially inward from the tread portion to join with a respective bead; a supporting carcass for the tread portion and sidewalls. A pump passageway is positioned within a bending region of the tire, the pump passageway being operative to open and close as the tire rotates, and having an inlet end and an outlet end, wherein the outlet end is in fluid communication with the tire cavity and a valve assembly is in fluid communication with the inlet end of the pump passageway. A filter conduit is mounted in the tire, the filter conduit having a first end in air flow communication with the outside air and a second end connected to the valve assembly inlet port, wherein the filter conduit further includes filter media.

In a second preferred aspect, the invention provides a tire assembly including a tire having a tread portion and a pair of sidewalls extending radially inward from the tread portion to join with a respective bead; a supporting carcass for the tread portion and sidewalls. A pump passageway is positioned within a bending region of the tire, the pump passageway being operative to open and close as the tire rotates, and having an inlet end and an outlet end, wherein the outlet end is in fluid communication with the tire cavity and a valve assembly is in fluid communication with the inlet end of the pump passageway. A filter assembly is formed of a housing having an interior or first cavity for receiving a filter media, the interior or first cavity having an inlet in fluid communication with the outside air and an outlet in fluid communication with a valve assembly port, the housing further comprising a second cavity, wherein the second cavity is in fluid communication with the pump inlet and a valve assembly outlet.

In a third preferred aspect, the invention provides a tire assembly including a tire having a tread portion and a pair of sidewalls extending radially inward from the tread portion to join with a respective bead; a supporting carcass for the tread portion and sidewalls. A pump passageway is positioned within a bending region of the tire, the pump passageway being operative to open and close as the tire rotates, and having an inlet end and an outlet end, wherein the outlet end is in fluid communication with the tire cavity and a valve assembly is in fluid communication with the inlet end of the pump passageway. A filter assembly is formed of a housing having a single interior cavity for receiving a filter media, the interior cavity having an outlet in fluid communication with a valve assembly port, and an inlet in fluid communication with the outside air, wherein the outlet end of the pump passageway is in fluid communication with the tire cavity.

### Brief Description of the Drawings

The invention will be described by way of example and with reference to the accompanying drawings in which:
FIG. 1 is an exploded view of a tire and rim assembly shown with a pump, valve and filter assembly;
FIG. 2 is a front view of the tire and rim assembly of Fig. 1;
FIG. 3 is a perspective view of the pump tube assembly showing the inlet and outlet ends connected to the T fitting;
FIG. 4 is a cross-sectional view of the tire showing the filter assembly and valve assembly in the tire bead area;

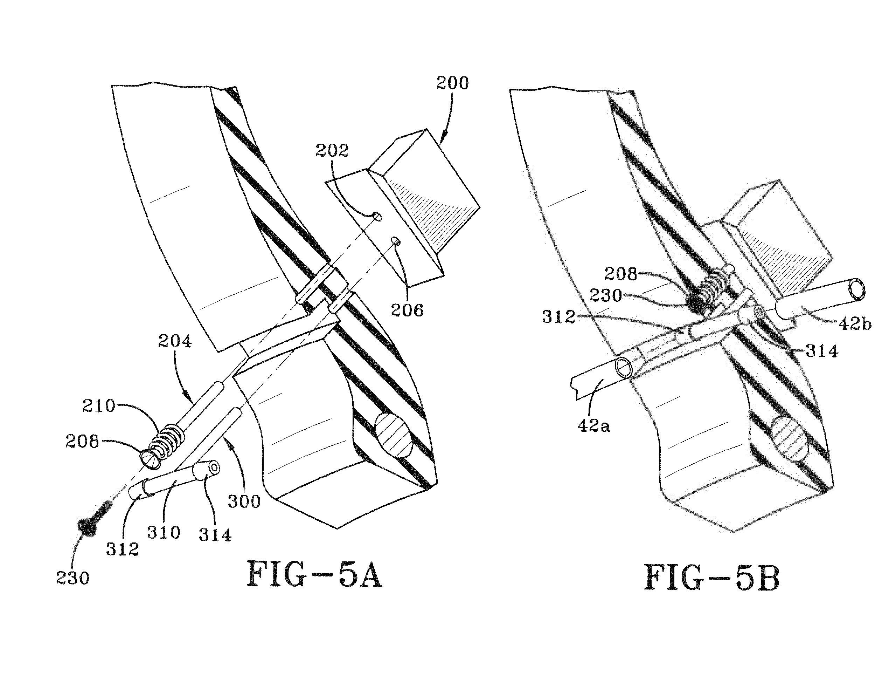

FIG. 5a is an exploded side view of the filter and valve assembly and the connectors in the bead area of the tire;
FIG. 5b is a side view of the filter and valve assembly shown assembled to the tire bead area;
FIG. 6 is a side cross-sectional view of the filter and valve assembly shown assembled to the tire bead area;

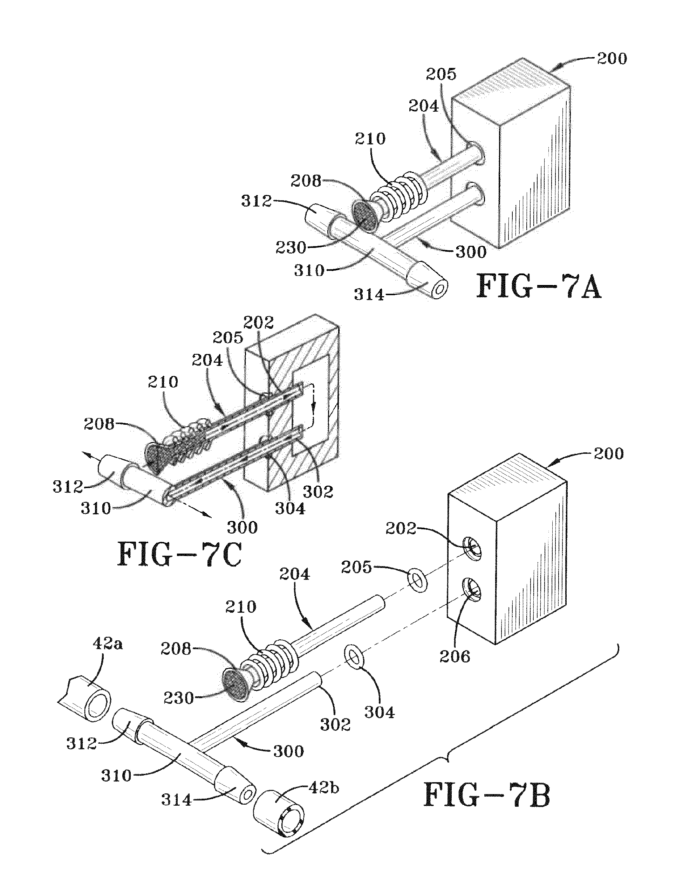

FIG. 7A is a front view of the filter and valve assembly;
FIG. 7B is an exploded view of the filter and valve assembly;
FIG. 7C is a side cross-sectional view of the filter and valve assembly;
FIG. 8A is a front view of a second embodiment of a filter and valve assembly;
FIG. 8B is a side cross-sectional view of the second embodiment of the filter and valve assembly of Fig. 8A;
FIG. 8C is an exploded view of the second embodiment of the filter and valve assembly of Fig. 8A;
FIG. 9A is a top cross-sectional view of the second embodiment of the filter and valve assembly of Fig. 8A in the direction 9A;
FIG. 9B is a side cross-sectional view of the second embodiment of the filter and valve assembly of Fig. 8A in the direction 9B;
FIG. 9C is a close up side cross-sectional view of the valve assembly;
FIG. 10A is a front view of a third embodiment of a filter and valve assembly;
FIG. 10B is a side cross-sectional view of the third embodiment of the filter and valve assembly of Fig. 10A;
FIG. 11A is a top cross-sectional view of the third embodiment of the filter and valve assembly of Fig. 10A in the direction 11 A;
FIG. 11B is a side cross-sectional view of the third embodiment of the filter and valve assembly of Fig. 11A in the direction 11 B;
FIG. 12A is a perspective view of a fourth embodiment of a filter and valve assembly;
FIG. 12B is a side cross-sectional view of the fourth embodiment of the filter and valve assembly of Fig. 12A;
FIG. 13A is a cross-sectional view of the fourth embodiment of the filter and valve assembly of Fig. 12A in the direction 13A;
FIG. 13B is a view of the fourth embodiment of the filter and valve assembly of Fig. 12A in the direction 13B; and
FIG. 13C is a cross-sectional view of the fourth embodiment of the filter and valve assembly of Fig. 12A in the direction 13C.

### Detailed Description of Example Embodiments of the Invention

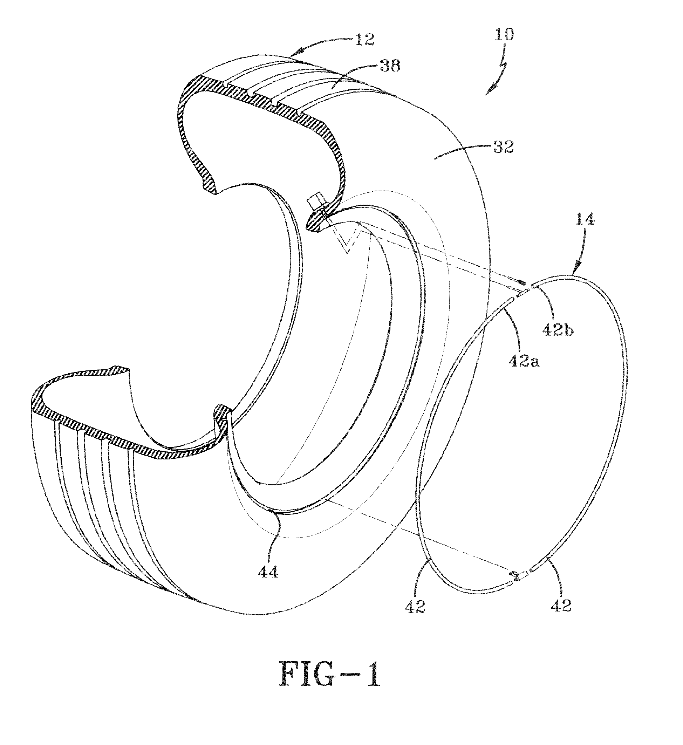

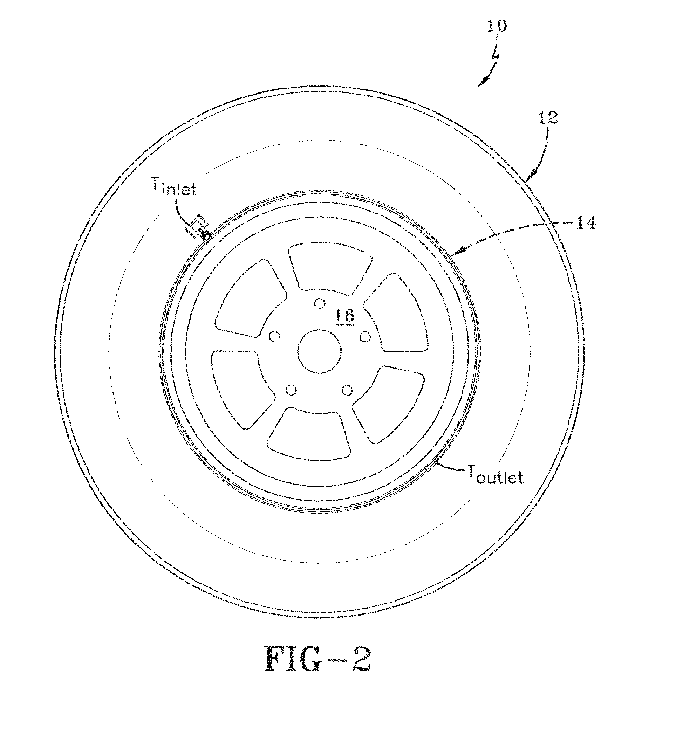

Referring to FIGS. 1 and 2, a tire assembly 10 is shown. A tire 12 comprsies and a pump assembly 14. The tire 12 preferably mounts in a conventional fashion to a wheel 16 having outer rim flanges 22. An annular rim body 28 joins the rim flanges 22 and supports the tire assembly as shown. The tire 12 is preferably of conventional construction, having a pair of sidewalls 32 extending from opposite bead areas 34 to a crown or tire tread region 38. The tire and rim enclose an interior tire cavity 40 which is filled with air.

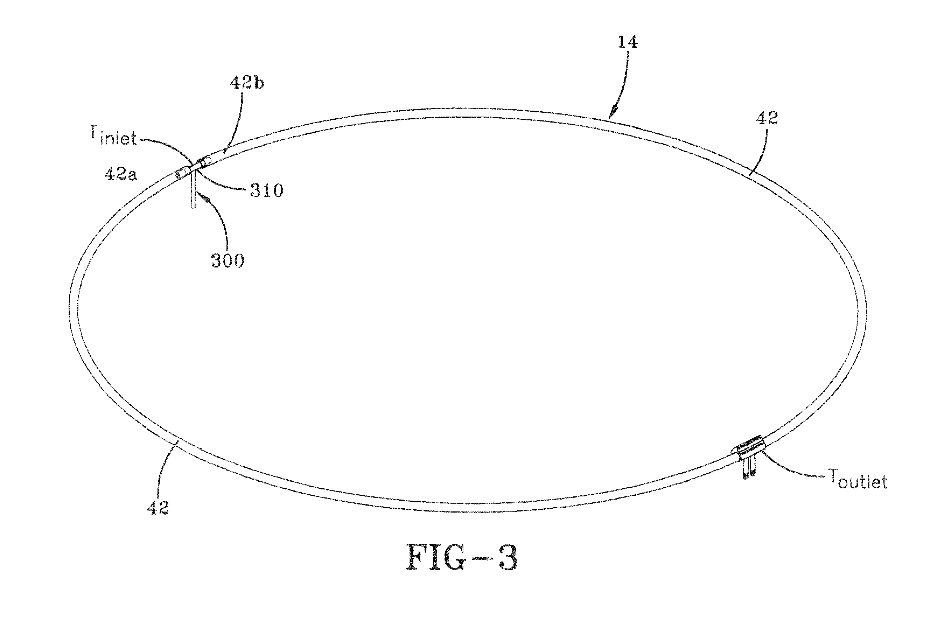

As shown in FIGS. 1 and 3, the tire assembly includes a pump 14 formed of a pump passageway 42 that is mounted or located in the tire in a channel 44, preferably near the bead region 34 of the sidewall. The pump passageway 42 may be formed of a discrete tube (as shown) made of a resilient, flexible material such as plastic, elastomer or rubber compounds, and is capable of withstanding repeated deformation cycles when the tube is deformed into a flattened condition subject to external force and, upon removal of such force, returns to an original condition. The tube is of a diameter sufficient to operatively pass a volume of air sufficient for the purposes described herein and allowing a positioning of the tube in an operable location within the tire assembly as will be described. Preferably, the tube has an elliptical cross-sectional shape, although other shapes such as round may be utilized.

The pump passageway 42 itself may also be integrally formed or molded into the sidewall of the tire during vulcanization, eliminating the need for an inserted tube. An integrally formed pump passageway is preferably made by building into a selected green tire component such as a chafer, a removable strip made of wire or silicone. The component is built into the tire and cured. The removable strip is then removed post cure to form a molded in or integrally formed pump air passageway.

Hereinafter, the term "pump passageway" refers either to installed tubes or an integrally molded in passageway. The location selected for the pump passageway within the tire may be within a tire component residing within a high flex region of the tire, sufficient to progressively collapse the internal hollow air passageway as the tire rotates under load thereby conveying air along the air passageway from the inlet to the pump outlet.

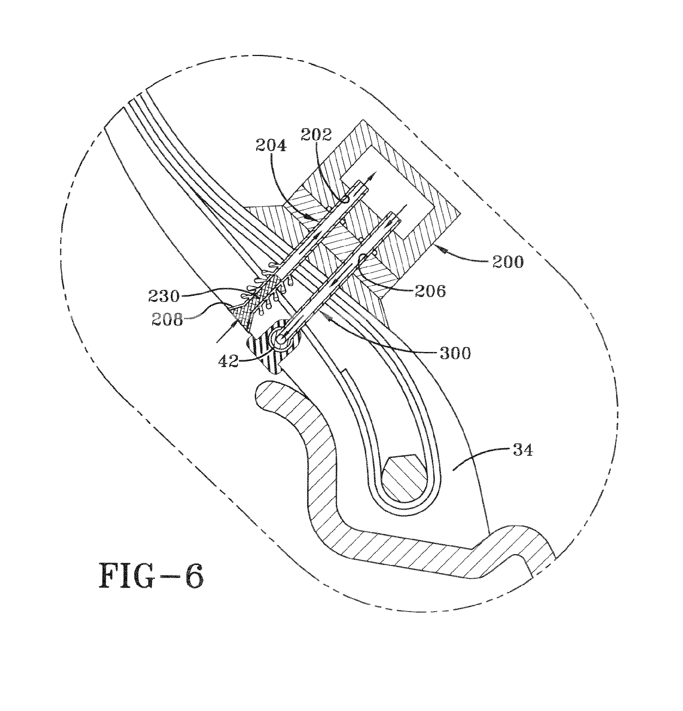

The pump air passageway 42 has two inlet ends 42a, 42b joined together by a valve system 200, as shown in Figures 1, 6. The valve system functions to regulate the amount of air supplied to the pump. Examples of pressure regulators or valve systems suitable for use with the invention are disclosed in applications US-A-2013/0048176, US-A-2013/0048177 and US-A-2013/0048178. The pump air passageway has two outlet ends 44a, 44b that are in fluid communication with the tire cavity. As shown in this particular example, there are two 180 degree pumps, so that the inlet ends 42a, 44a and the outlet ends 42a, 44a are preferably spaced apart approximately 180 degrees. However, the inlet and outlet ends may for instance also be spaced apart 90 degrees, or 270 degrees. To modify the system for a 360 degree or greater, the pump only has one inlet and one outlet, wherein the outlet is located next to the inlet, and is in fluid communication with the tire cavity.

The valve assembly 200 is preferably affixed to the inside of the tire, near the bead area. The valve assembly 200 has an inlet port 202 and an outlet port 206. The valve assembly 200 is operable to control the amount of inlet air to the pump system 42. If the tire cavity pressure 40 falls below a set trigger pressure, the valve assembly allows air to enter through the filter conduit 204, and then through to the pump passageway 42. The valve assembly 200 may allow airflow into the pump system through an air inlet port 210. The valve assembly 200 also may control the flow of air from the pump into the tire cavity, as well as prevent cavity air from back flowing into the pump passageways.

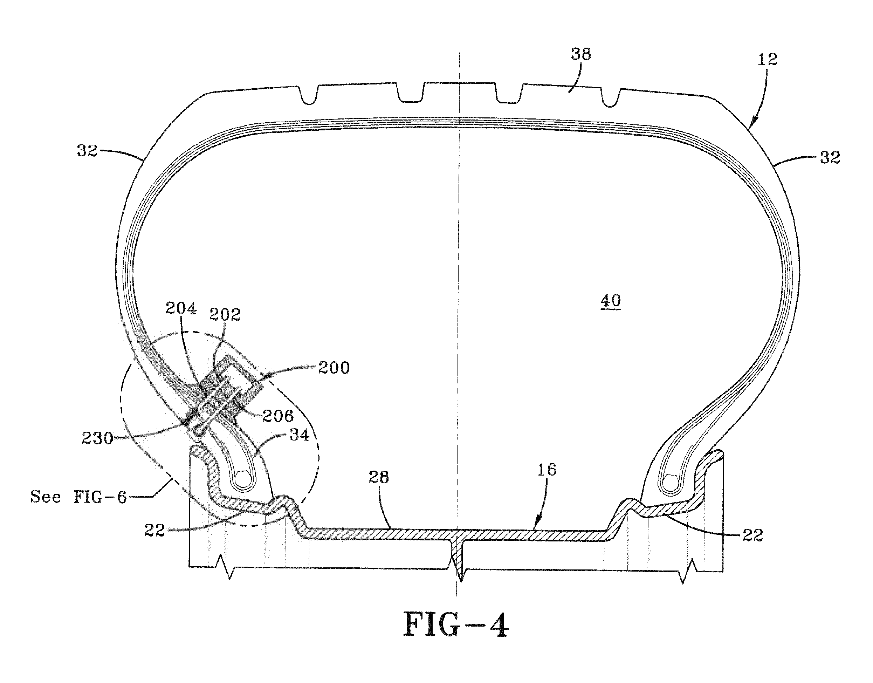

A filter conduit 204 is shown in Figure 4, and is a flexible tube or passageway that extends from the tire sidewall to the inlet port 202 of the valve assembly 200. An optional gasket 205 is received about the filter conduit to seal the inlet port 202. The filter conduit 204 is preferably made of high strength polyurethane. The inlet end 208 has an enlarged opening that is positioned on the tire sidewall area, typically in the bead area. The inlet end 208 preferably has one or more barbs 210, which lock or secure the filter conduit 204 in the sidewall of the tire.

A filter 230 is received in the inlet end 208 of the filter conduit. The filter 230 comprises layers of filter media such as a woven or nonwoven fiber, foam, spun fiberglass, charcoal, or other materials known to those skilled in the art. Alternatively, a membrane filter such as PTFE, GoreTex may be used, alone or in combination with the filter media.

An outlet conduit 300 has a first end 302 that is connected to the outlet port 206 of the valve assembly 200. An optional gasket 306 is provided about the outlet conduit 300 to seal the outlet port 206. The outlet conduit 300 has a second, preferably T-shaped end 310 having outlet ends 312, 314 that are connected to the pump tube ends 42a, 42b.

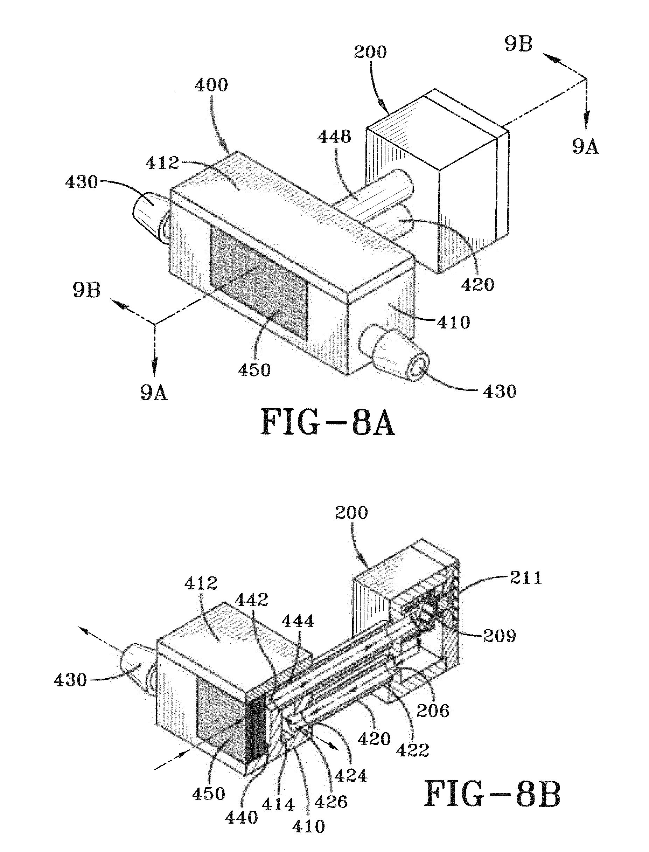

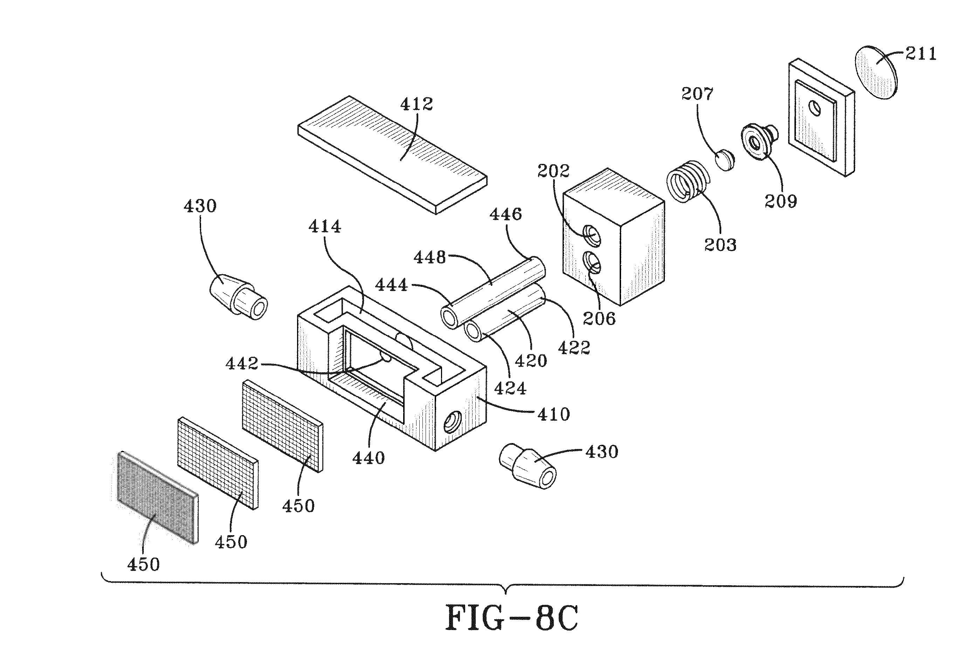

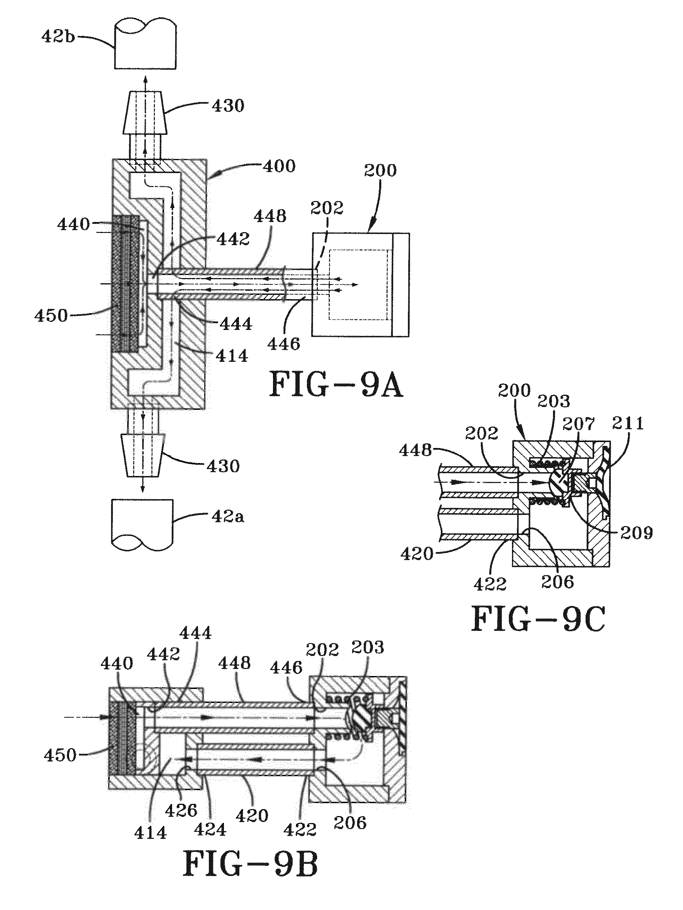

Figures 8-9 illustrate a second embodiment of a filter assembly 400 of the present invention. As shown in Fig. 8C, the filter assembly 400 has a housing 410 having a removable cover 412. As shown in Figs. 8B and 9B, the housing 410 has an interior cavity 414 that is in fluid communication with the outlet of the valve assembly 200. The valve assembly as shown in Fig. 8B regulates the inlet flow to the pump inlet. As shown in Fig. 9C the valve assembly may include a spring 203 which biases a sealing member 207 in an open position relative to the inlet 202 of a valve assembly. A holder 209 has a first end which supports the sealing member 207, and a second end positioned against a flexible disk 211 that is in fluid communication with the tire cavity pressure, and responsive thereto. As shown in Fig. 9B, a valve conduit 420 has a first end 422 connected to the outlet port 206 of the valve assembly, and a second end 424 connected to an inlet port 426 of the housing 400. The valve conduit 420 communicates fluid from the valve assembly 200 to the interior cavity 414 of the filter housing, and then to the pump via outlet ends 430.

As shown in Fig. 8A, the filter housing 400 further includes a filter pocket 440 for receiving one or more layers of filter media 450. The filter pocket 440 and filter media 450 are in fluid communication with the outside air, and is preferably positioned on the outside surface of the tire, typically near the pump. As shown in Fig. 8C and 9A, the filter pocket 440 has an outlet 442 connected to an inlet end 444 of a filter conduit 448. The filter conduit 448 has an outlet end 446 connected to the inlet port 202 of the valve assembly 200.

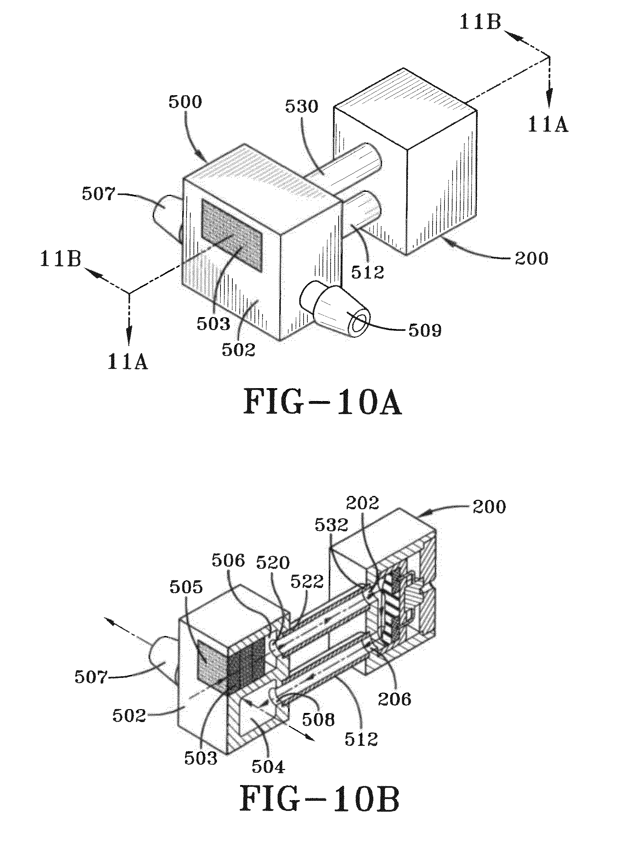

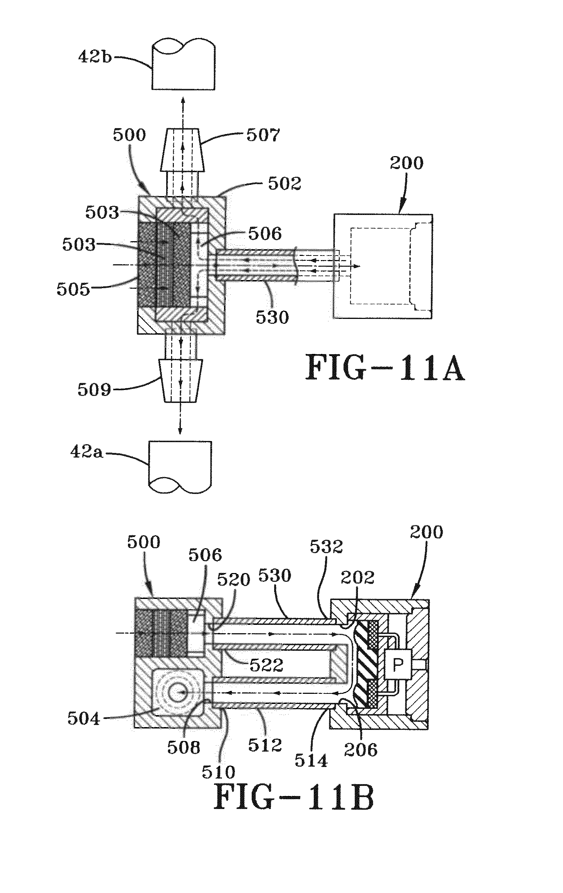

Figures 10-11 illustrate a third embodiment of a filter assembly 500. As shown in Figure 10B, the filter assembly has an external housing 502 which houses a first and second cavity 504, 506. The first cavity 504 has a single inlet opening 508 that is connected to a first end 510 of a valve conduit 512. The valve conduit 512 has a second end 514 that is connected to the inlet port 202 of the valve assembly 200. The first cavity 504 receives filtered air from the valve assembly 200 through the valve conduit 512 and into the first cavity. The first cavity 504 has two outlet ends 507, 509 connected to the pump ends 42a, 42b. The valve assembly is shown in a generic manner, and can control the flow to the valve conduit 512 and or the inlet flow from the filter conduit. The second cavity 506 houses the filter media 503 and/or filter membrane 505 and has an outlet port 520 connected to first end 522 of a filter conduit 530. The filter conduit 530 has a second end 532 connected to the inlet port 202 of the valve assembly, for providing filtered ambient air to the valve assembly.

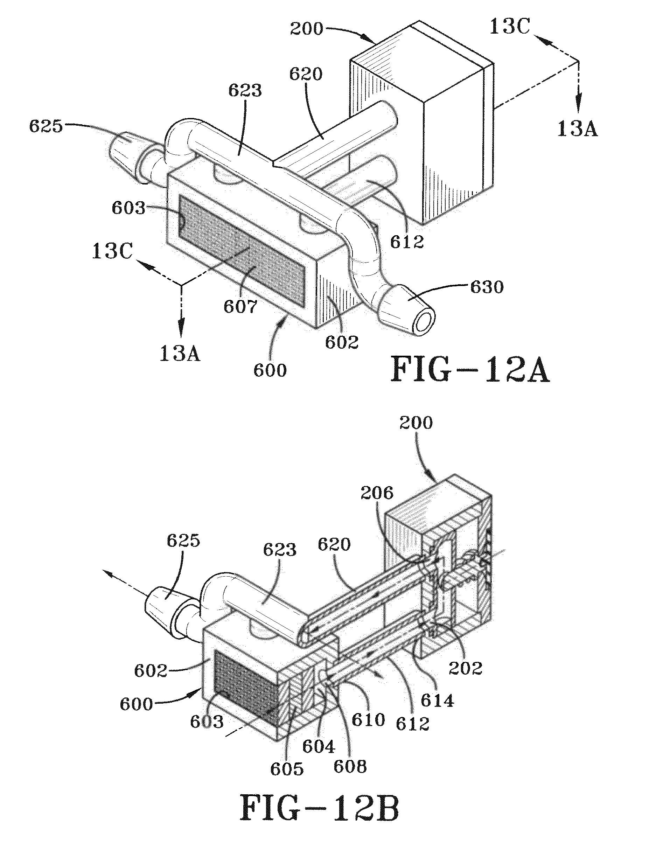

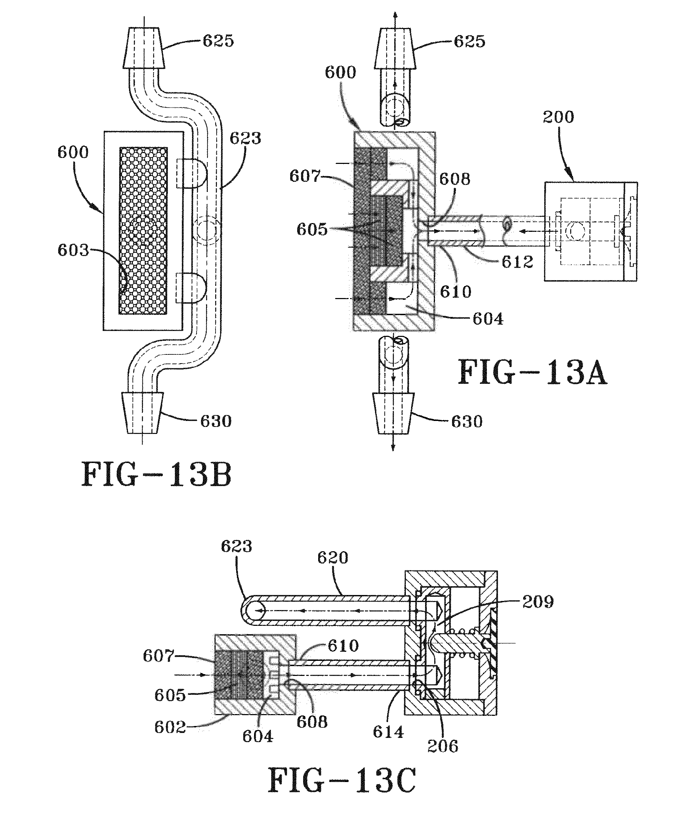

Figures 12-13 illustrate a fourth embodiment of a filter assembly 600. As shown in Figure 12B, the filter assembly has an external housing 602 which houses a single cavity 604. The filter cavity 604 has an outlet opening 608 that is connected to a first end 610 of a valve conduit 612. The valve conduit 612 has a second end 614 that is connected to the inlet port 202 of the valve assembly 200. The filter cavity 604 has filter media 605 and an optional filter membrane 607 received in the single cavity. The filter cavity 604 is positioned to be in fluid communication with the outside air, typically on the sidewall of the tire. Thus ambient air enters the housing through an opening 603 of the filter cavity 604, and passes through the filter media 605 and optional filter membrane 607 to the inlet 202 of the valve assembly 200. If the tire needs air, the valve assembly opens and allows the filtered air to travel through the valve cavity 209 and into the valve conduit 620. The valve conduit 620 connects to a T 623 with two outlet end 625, 630 that are connected to a respective pump ends 42a, 42b.

## Claims

1. A tire having:
a tread portion (38), a pair of sidewalls (32) extending radially inward from the tread portion to join with a respective bead (34), a tire cavity (40) and a supporting carcass for the tread portion and sidewalls;
a pump passageway (42) positioned within a bending region of the tire (12), the pump passageway being operative to open and close as the tire rotates, and having an inlet end (42a, 42b) and an outlet end (44a, 44b), wherein the outlet end is in fluid communication with the tire cavity (40) and a valve assembly (200) is in fluid communication with the inlet end of the pump passageway; the tire (12) further comprising at least one of:
(i) a filter assembly (500) formed of a housing (502) having an interior or first cavity (506) for receiving a filter media (503), the interior or first cavity (506) having an inlet in fluid communication with the outside air and an outlet in fluid communication with a valve assembly port (202), the housing (502) further comprising a second cavity (504), wherein the second cavity (504) is in fluid communication with the pump inlet and a valve assembly outlet (206); or
(ii) a filter assembly (600) formed of a housing (602) having a single interior cavity (604) for receiving a filter media (605), the interior cavity having an outlet (608) in fluid communication with a valve assembly port (202), and an inlet in fluid communication with the outside air, wherein the outlet end of the pump passageway (42) is in fluid communication with the tire cavity (40); and/or
(iii) a filter conduit (204) mounted in the tire (12), the filter conduit having a first end in air flow communication with the outside air and a second end connected to a valve assembly port (202), wherein the filter conduit (204) further includes filter media (230).

2. The tire of claim 1 wherein the valve assembly port (202) is a valve assembly inlet port.

3. The tire of claim 1 or 2 wherein the filter conduit (204) has one or more barbs on an outer surface.

4. The tire of claim 1, 2 or 3 wherein the filter media is positioned in the first end of the filter conduit (204).

5. The tire of at least one of the previous claims wherein the filter conduit (204) is mounted through one of the tire sidewalls (32).

6. The tire of at least one of the previous claims wherein the first end of the filter conduit (204) is positioned flush with an outer sidewall surface.

7. The tire of at least one of the previous claims wherein the filter conduit (204) is made of polyurethane.

8. The tire of at least one of the previous claims wherein the filter media is a porous membrane.

9. The tire of at least one of the previous claims wherein first cavity (506) and the second cavity (504) are not in fluid communication with each other.

10. The tire of at least one of the previous claims wherein the tire (12) is an air maintenance tire.
